# EUROPEAN PATENT APPLICATION

(11) **EP 2 612 752 A1**
(43) Date of publication of application: **10.07.2013**
(21) Application number: 11821519.3
(22) Date of filing: 08.08.2011
(51) Int. Cl.: B32B 3/26, A23B 4/00, B32B 27/00, B65D 81/26

(54) **WATER ABSORBENT**

(30) Priority: 31.08.2010 JP 2010194235
(71) Applicant: Unicharm Corporation, Ehime 799-0111 (JP)
(72) Inventor: TANAKA, Yoshinori, Kanonji-shi Kagawa 769-1602 (JP); TAKEUCHI, Naohito, Kanonji-shi Kagawa 769-1602 (JP)
(74) Representative: Vaughan, Jennifer Ann
(86) International application number: PCT/JP2011/068024
(87) International publication number: WO 2012/029501

(57) **Abstract**

A fluid absorbent structure adapted to absorb fluids oozing from foodstuffs on its contacting surface with the foodstuffs even when the fluid absorbent structure is in a slanted position against the container bottom. A drip sheet 1 includes an upper sheet 2, a lower sheet 3 and an absorbent sheet 4 interleaved between these upper and lower sheets 2, 3. The upper sheet 2 includes a perforated region 22 and non-perforated region 23. The non-perforated region 23 is formed with a display element 6 which is visually recognized from an upper surface of the upper sheet 2. The upper sheet 2 is formed with grooves 7 which are depressed from the upper surface of the upper sheet 2 toward a lower surface facing the absorbent sheet 4 and at least partially overlaps with the perforations 21. The grooves 7 include a first segment 71 extending along a longitudinal imaginary center line P-P, and second and third segment 72, 73 intersecting the first segment 71. The lower sheet 3 is formed with a plurality of perforations 31 which are breathable and liquid-permeable.

## Description

### {Technical Field}

The present invention relates to fluid absorbent structures adapted to absorb fluid and, more specifically, relates to sheet-like fluid absorbent structures adapted to absorb fluids oozing from foodstuffs such as fillet of fresh fish inclusive of sashimi, i.e., thinly-sliced fresh fish or meat placed on a tray.

### {Background}

Conventionally, for trays for foodstuffs such as sashimi, drip sheets are known as fluid absorbent structures adapted to be laid under the foodstuffs such as sashimi. For example, JP 2008-265798 A (PTL 1) discloses a drip sheet including thermoplastic upper and lower sheets and an absorbent sheet placed between these upper and lower sheets. The upper and lower sheets are formed with a plurality of perforations. Fluids oozing from the foodstuff such as sashimi pass through the perforations of the upper or lower sheet and are absorbed by the absorbent sheet.

### {Citation List}

### {Patent Literature}

{PTL 1}: JP 2008-265798 A

### {Summary}

### {Technical Problem}

In the above-mentioned drip sheet, the upper and lower sheets are formed substantially over the entire area thereof with the perforations. Assuming that this drip sheet is laid, for example, on a garnishing served with sashimi and the sashimi is placed thereon, the drip sheet will be in a slanted position against a container bottom and fluids oozing from sashimi will flow on the drip sheet. As a result, the fluids might remain on the container bottom or soil the garnishing without being absorbed by the drip sheet.

An object of the present invention is to provide a fluid absorbent structure adapted to absorb fluids oozing from foodstuffs on its contacting surface with the foodstuffs even when the fluid absorbent structure is in a slanted position against the container bottom.

### {Solution to Problem}

The present invention relates to a fluid absorbent structure including an upper sheet and an absorbent sheet placed on a lower side of the upper sheet.

The upper sheet is formed with a plurality of perforations and at least one groove depressed toward the side of the absorbent sheet.

According to an embodiment of the present invention, the at least one groove is formed so as to overlap with at least part of the perforations. The at least one groove may be formed so as to completely overlap with some of the perforations and also to overlap with part of the perforations.

According to another embodiment of the present invention, the at least one groove is formed so as to overlap with a straight line connecting some of the perforations. The at least one groove may be formed so as to completely overlap with the straight line connecting the some of the perforations and also to be slightly out of alignment as long as substantially overlapping with the straight line.

According to even another embodiment of the present invention, the at least one groove includes segments extending in directions intersecting with each other.

According to still another embodiment of the present invention, the at least one groove is formed to be depressed from the upper sheet to the absorbent sheet in a thickness direction.

According to yet another embodiment of the present invention, the fluid absorbent structure includes a perforated region in which the perforations are formed and a non-perforated region in which none of the upper perforations are formed and the non-perforated region is formed with a display element adapted to be visually recognized from the side of the upper sheet.

According to further another embodiment of the present invention, the upper sheet is formed of a liquid-impermeable plastic sheet.

According to even further another embodiment of the present invention, the fluid absorbent structure further includes a breathable lower sheet at a lower side of the absorbent sheet.

According to an alternative embodiment of the present invention, the lower sheet is formed with a plurality of second perforations.

According to a further alternative embodiment of the present invention, the fluid absorbent structure at least partially includes a shape imitating a plant leaf and the at least one groove has a shape imitating a leaf vein.

### {Advantageous Effects of Invention}

The present invention includes an upper sheet and an absorbent sheet placed on the upper sheet wherein the upper sheet is formed with a plurality of perforations and at least one groove depressed toward the absorbent sheet. With such an arrangement, even when the fluid absorbent structure is a slanted position, fluids oozing from foodstuffs placed on the upper sheet temporarily stay in the at least one groove and then can be absorbed through the perforations. Even when the fluid absorbent structure is in a slanted position, fluids can be absorbed from a surface contacting with the foodstuffs.

### {Brief Description of Drawings}

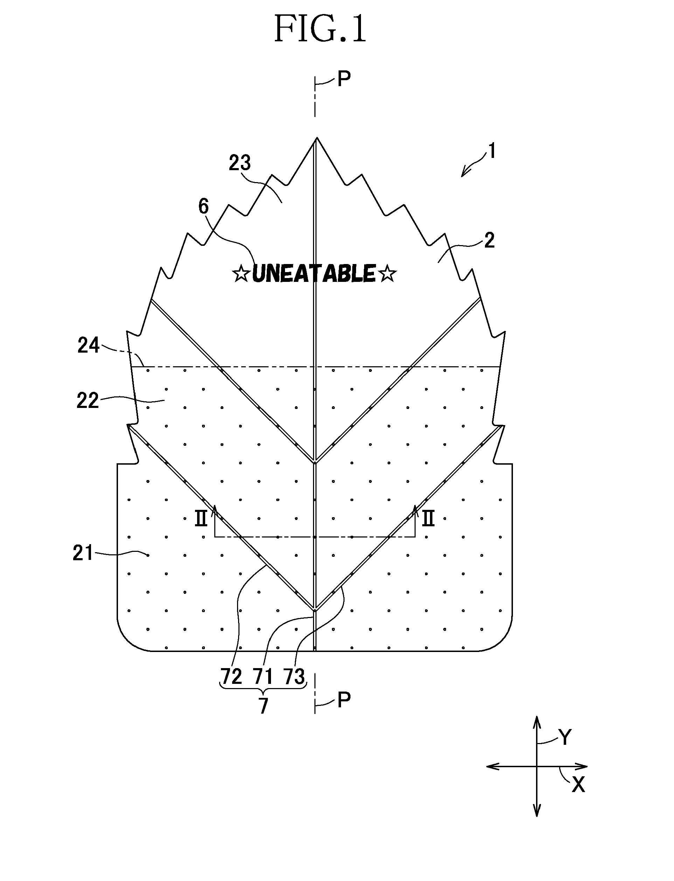

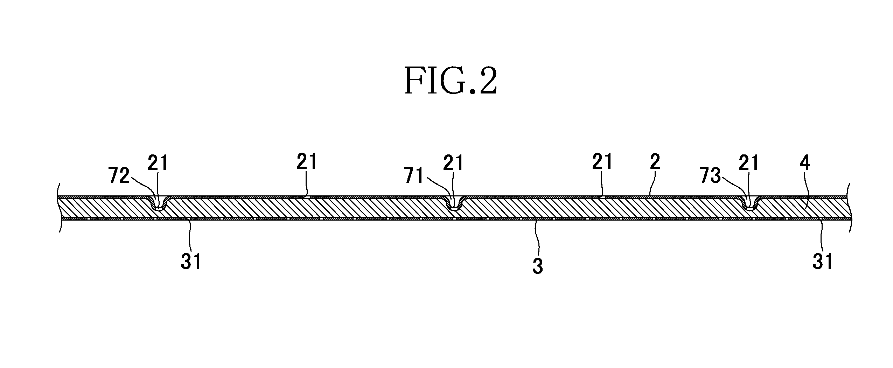

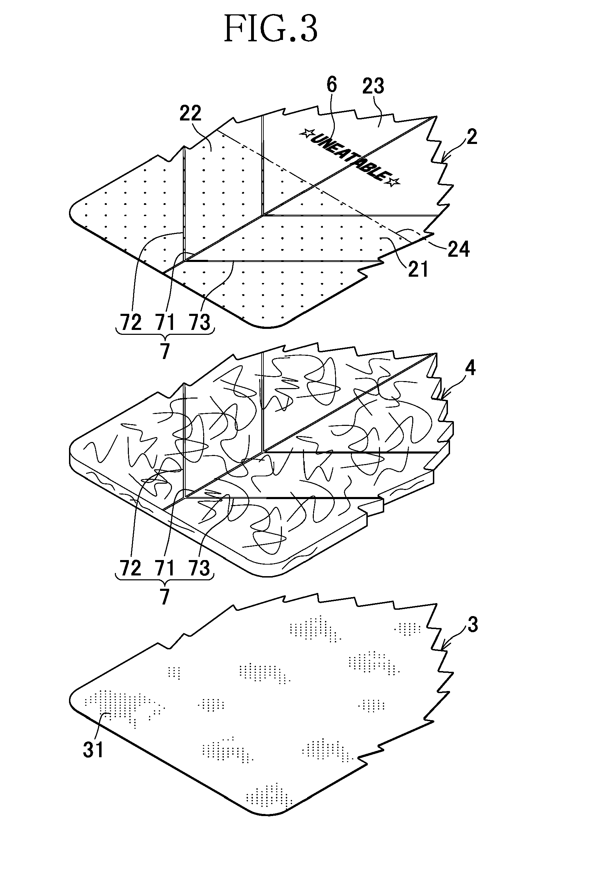

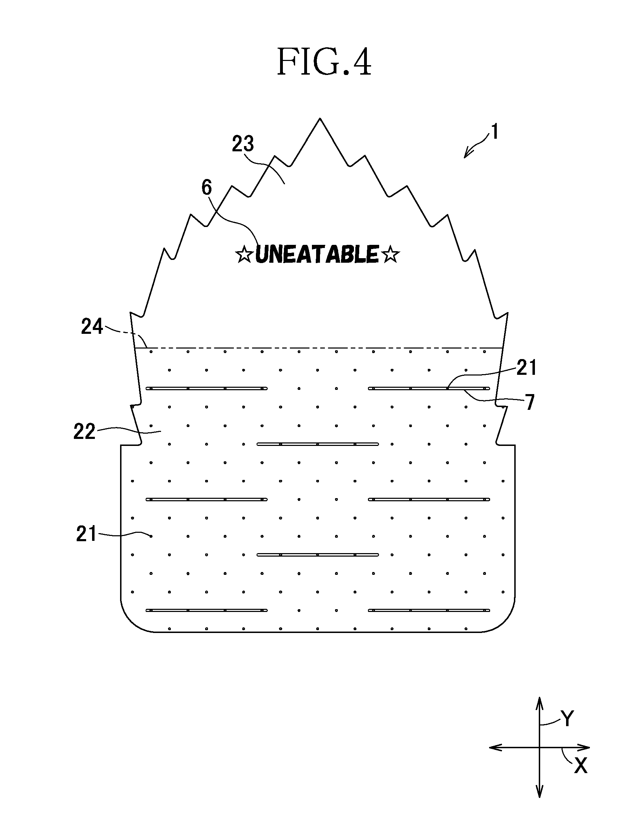

{Fig. 1} Fig. 1 is a plan view illustrating a drip sheet as an example of a fluid absorbent structure according to the present invention.
{Fig. 2} Fig. 2 is a sectional view taken along line II-II in Fig. 1.
{Fig. 3} Fig. 3 is an exploded perspective view corresponding to Fig. 1.
{Fig. 4} Fig. 4 is a plan view illustrating the drip sheet according to another embodiment.

### {Description of Embodiments}

A fluid absorbent structure according to the present invention will be described hereunder on the basis of a drip sheet as an example of the fluid absorbent structure adapted to be laid on a container such as a foodstuff tray and to absorb fluids oozing from the foodstuff, for example, sashimi. Fig. 1 is a plan view of drip sheet, Fig. 2 is a sectional view taken along line II-II in Fig. 1 and Fig. 3 is an exploded perspective view corresponding to Fig. 1.

The drip sheet 1 has a longitudinal direction Y, a transverse direction X and a longitudinal imaginary center line P-P bisecting a dimension in the transverse direction X. The drip sheet 1 includes an upper sheet 2, a lower sheet 3 and an absorbent sheet 4 interposed between these upper and lower sheets 2, 3. The upper and lower sheets 2, 3 and the absorbent sheet 4 are coextensive with one another and a part of an outline of this sheet assembly is partially formed in a shape imitating a leaf of plant such as green perilla and a part of the outline is formed in a substantially rectangular shape as viewed in the longitudinal direction Y.

As a material of the upper sheet 2, a hydrophobic and thermoplastic film formed of a synthetic resin such as polypropylene may be used. In this regard, a sheet colored in green imitating a green perilla leaf may be used as the upper sheet 2. As a material of the lower sheet 3, a hydrophobic and thermoplastic film containing a synthetic resin such as polyethylene may be used. The absorbent sheet 4 contains wood pulp and a mass per unit area thereof is about 50 g/m². The absorbent sheet 4 is joined to the upper and lower sheets 2, 3 by joining means such as a hot melt adhesive applied in patterns with certain spaces, for example, in a dot-pattern, a stripe-pattern, a spiral-pattern or a zigzag-pattern.

The upper sheet 2 includes a perforated region 22 formed with a plurality of perforations 21 and a non-perforated region 23. The perforated region 22 and the non-perforated region 23 are segmented by an imaginary line 24 extending in the transverse direction X. An opening ratio of the perforations 21 in the perforated region 22 is in a range of about 2 to about 30% and about 10% in the illustrated embodiment. Each of the perforations 21 has a diameter in a range of about 0.2 to about 5.0 mm and about 0.9 mm in the illustrated embodiment. The perforations 21 are arranged in the longitudinal direction Y as well as in the transverse direction X at pitches in a range of about 0.5 to about 20.0 mm and about 2.5 mm in the illustrated embodiment. The perforations 21 may be formed by means of a needle puncture working. The upper sheet 2 may be formed with the perforations before placing on the absorbent sheet 4 or after placing on the absorbent sheet 4. In this regard, it is also possible to form the perforations 21 so that an opening area of the individual perforations may be gradually reduced from the upper surface toward the lower surface, namely, tapered.

The non-perforated region 23 is formed with a display element 6 which can be visually recognized from an upper surface of the upper sheet 2. As the display element, for example, letters and/or graphics may be used. Such a display element may be formed on the upper side or a lower side of the upper sheet 2 facing the absorbent sheet 4, for example, with use of printing. By forming the display element 6 in the non-perforated region 23, the display element 6 can be prevented from becoming less visible due to the presence of the perforations 21. A laminate sheet composed of a plurality of layers may be also used and the plurality of layers may be subjected to water-tight lamination so as to interpose the display element 6 between the component layers of the laminate sheet and thereby preventing the printed display element 6 from oozing toward the upper sheet 2 or the absorbent sheet 4.

The upper sheet 2 and the absorbent sheet 4 are formed with grooves 7. The grooves 7 are formed to be depressed from the upper side of the upper sheet 2 in a thickness direction of the absorbent sheet 4 and to overlap, at least partially, with the perforations 21. According to the illustrated embodiment, the grooves 7 include a first segment 71 formed along a longitudinal imaginary center line P-P bisecting a dimension in the transverse direction X, and second and third segments 72, 73 extending so as to intersect with the first segment 71. The second and third segments 72, 73 are substantially symmetric about the longitudinal imaginary center line P-P. The respective segments of the grooves 7 are respectively formed along a straight line defined by a plurality of the perforations 21. Such grooves 7 may be formed imitating a leaf vein.

The grooves 7 may be formed by hot-pressing the upper sheet 2 and the absorbent sheet 4 in an overlapped state from the side of the upper sheet 2. Such grooves 7 are formed in the upper sheet 2 and the absorbent sheet 4 but not in the lower sheet 3. The lower sheet 3 may be placed on the absorbent sheet 4 after the upper sheet 2 and the absorbent sheet 4 have been formed with the grooves 7 or the upper sheet 2 and the absorbent sheet 4 may be formed with the grooves 7 after the absorbent sheet 4 has been placed on the lower sheet 3. The grooves 7 are preferably formed in a tapered shape so that a cross-sectional shape thereof may be gradually reduced from the upper sheet 2 to the absorbent sheet 4.

The lower sheet 3 is formed with a plurality of perforations 31 which are breathable and liquid-permeable. The perforations 31 are formed over the entire area of the lower sheet 3 and arranged at regular intervals and a diameter of each perforation is in a range of about 0.2 to about 0.3 mm and an opening ratio of the perforations is in a range of about 50 to about 95%. The perforations 31 may be formed with use of, for example, vacuum suction or hot-press processing. The lower surface perforations 31 may be also formed in a tapered shape so that an opening area of the perforation may be gradually reduced from the lower surface to the upper surface of the lower sheet 3.

In the above-mentioned drip sheet 1, the perforations 21 formed in the upper sheet 2 ensure that fluid oozing from the foodstuff is absorbed by the absorbent sheet 4 through these perforations 21. In addition, the grooves 7 formed in the upper sheet 2 and the absorbent sheet 4 ensure that, even when the drip sheet 1 is placed on a garnishing served with sashimi in a slanted position, fluid temporarily stays in the grooves 7. The grooves 7 partially overlap the perforations 21 and therefore fluid temporarily staying in the grooves 7 flows into the overlapping perforations 21 and is absorbed by the absorbent sheet 4.

The grooves 7 are formed also in the absorbent sheet 4, and in such a region formed with the grooves 7, absorbent material of the absorbent sheet 4 has a density higher than that in the remaining area of the absorbent sheet 4. In consequence, in the grooves 7 of the absorbent sheet 4, fluid can be more smoothly absorbed than in the remaining area of the absorbent sheet 4. In addition, the formation of the grooves 7 also in the absorbent sheet 4 is effective to enlarge a water-absorbing area of the absorbent sheet 4. According to the illustrated embodiment, the grooves 7 are formed with a plurality of the perforations 21 and thus water-absorbing performance can be further accelerated. In this way, fluids can be prevented from running off along the upper surface of the drip sheet 1. In this regard, the grooves 7 may be on the upper sheet 2 alone, i.e., the absorbent sheet 4 may be formed with no grooves 7.

The formation of the grooves 7 makes it possible to prevent fresh foodstuffs such as sashimi placed on the upper sheet 2 from moving along the drip sheet 1. Particularly when the drip sheet 1 is in a slantedposition due to the presence of a garnishing, fresh foodstuffs such as sashimi placed on the slanted portion are apt to slip over this portion. However, the formation of the grooves 7 serves to enhance frictional resistance of the upper sheet 2, thereby preventing such undesirable slipping over this slanted portion. In addition, the grooves 7 temporarily retain fluids staying therein until such fluids are absorbed by the absorbent sheet through the perforations 21 and thus alleviates a possibility that fluids might stay in the remaining region of the upper sheet 2 not formed with the grooves 7. Assuming that the fluids stay on a groove-less region, the fresh foodstuffs such as sashimi will be apt to slip over such region. The presence of the grooves 7 can effectively prevent such a situation.

The grooves 7 include the first segment 71, and the second and third segments 72, 73 intersect with the first segment 71 so that the grooves 7 may be arranged to prevent fluids from running off in any direction even when the drip sheet 1 become slanted in any direction. In this way, fluids should not run off on the upper sheet 2 without passing through the perforations 21.

By forming also the lower sheet 3 with the perforations 31, it is possible to absorb fluids by the absorbent sheet 4 from the lower sheet 3 also. In this way, even if there are fluids remaining on the bottom of the container, such fluids can be absorbed. When the drip sheet 1 is interleaved between two layers of the foodstuffs, fluids oozing from the upper and lower layers of foodstuffs can be quickly absorbed.

The lower sheet 3 is not formed with the grooves 7 and therefore the entire lower surface of the lower sheet 3 is put in contact with the container bottom, making it possible to absorb fluids remaining on the bottom surface quickly. In this regard, the present invention is not limited to the drip sheet of which the lower sheet 3 is not formed with the grooves 7 and it is also possible to form the lower sheet 3 also with the grooves 7 similar to those formed in the upper sheet 2 and the absorbent sheet 4. The lower sheet 3 formed with the grooves 7 makes it possible to prevent a displacement of sashimi and garnishing served with sashimi.

The lower sheet 3 is not a constituent element essential to the present invention and the drip sheet 1 without the lower sheet 3 is also included in the scope of the present invention. As a material of the lower sheet 3, not only a plastic film but also a fibrous nonwoven fabric may be used. Such a fibrous nonwoven fabric, for example, a spunbonded/meltblown/spunbonded fibrous nonwoven fabric may be used.

Fig. 4 illustrates another embodiment of the present invention. As illustrated, a plurality of grooves 7 extends in the transverse direction X. These grooves 7 are arranged in parallel to each other and each of the grooves 7 extends in the transverse direction X. In this embodiment, the grooves 7 are spaced apart from each other in the transverse direction X, but it is also possible to configure each of the grooves 7 to extend continuously in the transverse direction. Further, it is possible to arrange some grooves 7 to extend in the longitudinal direction Y and to arrange some grooves 7 to extend in the transverse direction X so that these grooves 7 intersect each other. It is not essential for these grooves 7 to overlap with the perforations 21 so far as a purpose of blocking the fluids flowing on the upper sheet 2 is concerned. However, the perforations 21 and these grooves 7 preferably overlap with each other for the purpose of absorbing temporarily staying fluids as soon as possible.

While the case in which the grooves 7 completely overlap with the perforations 21 has been described as the embodiments of the present invention, the grooves may overlap at least partially with the perforations 21. While the case in which the grooves 7 are formed on the straight line connecting a plurality of the perforations 21 has been described, the grooves 7 may be formed substantially on such a straight line and where the grooves 7 are partially out of over lapping with the straight line or slightly displaced from such a straight line are not excluded from the scope of the present invention.

The configuration of the drip sheet 1 is not limited to that in this embodiment but various configurations may be selectively used. Factors such as opening ratio of the perforations 21, and the perforations 31 may be appropriately changed depending on kind and volume of the foodstuffs. The constituent members of the drip sheet 1 are not limited to the types of material described in this description but other types of material widely used in the relevant technical field may be used without limitation. The terms "first" and "second" used in the description and claims of the present invention are usedmerely to distinguish the similar elements, similar position or other similar means.

**{Reference Signs List}**

| | |
|---|---|
| 1 | drip sheet (fluid absorbent structure) |
| 2 | upper sheet |
| 3 | lower sheet |
| 4 | absorbent sheet |
| 6 | display element |
| 7 | groove |
| 21 | perforations |
| 22 | perforated region |
| 23 | non-perforated region |
| 31 | perforations |
| 71 | first segment |
| 72 | second segment |
| 73 | third segment |

## Claims

1. A fluid absorbent structure including an upper sheet and an absorbent sheet placed on a lower surface of the upper sheet, wherein:
the upper sheet is formed with a plurality of perforations and at least one groove depressed toward the side of the absorbent sheet.

2. The fluid absorbent structure according to claim 1, wherein the at least one groove is formed so as to overlap with at least part of the perforations.

3. The fluid absorbent structure according to claim 1 or 2, wherein the at least one groove is formed so as to overlap with a straight line connecting some of the perforations.

4. The fluid absorbent structure according to any one of claims 1 through 3, wherein the at least one groove includes segments extending in directions intersecting with each other.

5. The fluid absorbent structure according to any one of claims 1 through 4, wherein the at least one groove is formed to be depressed from the upper sheet to the absorbent sheet in a thickness direction.

6. The fluid absorbent structure according to any one of claims 1 through 5, further including a perforated region in which the perforations are formed and a non-perforated region in which none of the upper perforations are formed and the non-perforated region is formed with a display element adapted to be visually recognized from the side of the upper sheet.

7. The fluid absorbent structure according to any one of claims 1 through 6, wherein the upper sheet is formed of a liquid-impermeable plastic sheet.

8. The fluid absorbent structure according to any one of claims 1 through 7, further includes a breathable lower sheet at a lower side of the absorbent sheet.

9. The fluid absorbent structure according to any one of claims 1 through 8, wherein the lower sheet is formed with a plurality of second perforations.

10. The fluid absorbent structure according to any one of claims 1 through 9, wherein the fluid absorbent structure at least partially includes a shape imitating a plant leaf and the at least one groove has a shape imitating a leaf vein.
